(19) Europäisches Patentamt
European Patent Office
Office européen des brevets

(11) **EP 0 629 592 B1**

(12) **EUROPÄISCHE PATENTSCHRIFT**

(45) Veröffentlichungstag und Bekanntmachung des Hinweises auf die Patenterteilung:
**14.01.1998 Patentblatt 1998/03**

(51) Int. Cl.⁶: **C03C 15/00**, C03C 17/23, G02B 5/18, G02B 6/12

(21) Anmeldenummer: **94104387.9**

(22) Anmeldetag: **21.03.1994**

(54) **Verfahren zur Herstellung anorganischer diffraktiver Elemente und Verwendung derselben**

Process for the production of inorganic diffractive elements and their use

Procédé pour la production des éléments inorganiques diffractifs et leur application

(84) Benannte Vertragsstaaten:
**CH DE FR GB LI NL**

(30) Priorität: **18.06.1993 DE 4320122**
**15.11.1993 DE 4338969**

(43) Veröffentlichungstag der Anmeldung:
**21.12.1994 Patentblatt 1994/51**

(73) Patentinhaber:
• **Schott Glaswerke**
**55122 Mainz (DE)**
Benannte Vertragsstaaten:
**CH DE FR LI NL**
• **CARL-ZEISS-STIFTUNG**
**trading as SCHOTT GLASWERKE**
**55122 Mainz (DE)**
Benannte Vertragsstaaten:
**GB**

(72) Erfinder:
• **Heming, Martin, Dr.**
**D-55291 Saulheim (DE)**
• **Segner, Johannes, Dr.**
**D-55442 Stromberg (DE)**
• **Danielzik, Burkhard, Dr.**
**D-55218 Ingelheim (DE)**
• **Speit, Burkhard, Dr.**
**D-55126 Mainz (DE)**
• **Vogt, Helge**
**D-55299 Nackenheim (DE)**
• **Spengler, Stefan**
**D-55257 Budenheim (DE)**

(56) Entgegenhaltungen:
EP-A- 0 379 358          EP-A- 0 424 110
EP-A- 0 507 491          NL-A- 9 001 744
US-A- 4 343 890          US-A- 4 765 714

• CHEMICAL ABSTRACTS, vol. 118, no. 24, 14. Juni 1993, Columbus, Ohio, US; abstract no. 239358q, Seite 364 ; & JP-A-5 043 276 (KUMAZAWA TOSHIHIRO) 23. Februar 1993
• CHEMICAL ABSTRACTS, vol. 115, no. 26, 30. Dezember 1991, Columbus, Ohio, US; abstract no. 285699n, Seite 365 ; & JP-A-3 187 941 (ASAHI DENKA KOGYO KK) 15 August 1991

## Beschreibung

Die Erfindung betrifft ein Verfahren zur Herstellung anorganischer diffraktiver Elemente nach dem Oberbegriff des Patentanspruchs 1 sowie eine bevorzugte Verwendungen der erfindungsgemäß hergestellten diffraktiven Elemente.

Mit diffraktiven Reliefstrukturen versehene anorganische Substrate können beispielsweise als sog. Diffraktive Optische Elemente Verwendung finden. Diffraktive Optische Elemente (DOE) sind an sich bekannt und beispielsweise in Gabor, G., Nature 161, 777 (1948) oder Knop, K., Diffraktive Optik: Mikrostrukturen als optische Elemente, Phys. Bl. 47 (1991) Nr. 10 beschrieben. Unter diesem Begriff faßt man alle optischen Elemente, die eine Reliefstruktur auf ihrer Oberfläche tragen und aufgrund ihrer Gestalt und der Ausbildung dieser Reliefstruktur auf ihrer Oberfläche verschiedene optische Funktionen, wie zum Beispiel Strahlteilung, Strahlfokussierung, oder Strahlprofilformung übernehmen können, zusammen. Die Gestalt des die Reliefstruktur tragenden Substrats eines DOE's kann beliebig und somit an den jeweiligen Anwendungsfall angepaßt sein. Soweit durch eine besondere Gestaltung des DOE's wenigstens eine weitere optische Funktion ausgeführt wird, spricht man von sog. Hybridoptiken. Einzelheiten über Hybridoptiken sind beispielsweise in Czichy R., Hybrid Optics for Space Applications, University of Neuchatel (1992) zu finden.

DOE können sowohl als reflektive als auch als transmissive Systeme ausgebildet sein. Sie können aus den verschiedensten Materialien, z. B. Glas, Metall oder Kunststoff, bestehen. Übliche Abmessungen für ein DOE betragen ca. 1-30 mm Kantenlänge. Es gibt aber auch DOE mit wesentlich größeren Abmessungen, beispielsweise optische Gitter in Spektrographen (bis zu ca. 150 x 150 mm$^2$), Fresnell'sche Zonenplatten (z.B. aus Kunststoff für Anwendungen bei Automobilen im Fenster; typisch: Durchmesser bis zu 30 cm) oder in metallisiertem Kunststoff als Rolle vom Band für Geschenkpapier. Der Strukturabstand der verwendeten Reliefstrukturen liegt typischerweise in der Größenordnung der Wellenlänge der zu beugenden Strahlung.

DOE aus anorganischem Material, insbesondere aus Glas, auf die die vorliegende Erfindung hauptsächlich abstellt, zeichnen sich gegenüber den DOE'n aus Kunststoff durch eine hohe Homogenität, gute thermische und mechanische Stabilität sowie durch eine hohe Resistenz gegenüber chemischem Angriff und durch Formstabilität aus. Sie finden ihren Einsatz bevorzugt in Systemen mit hohen Leistungsdichten, insbesondere in Lasersystemen. Derartige Systeme können Leistungsdichten von bis zu 20 Watt und darüber besitzen. Für bestimmte Anwendungen sind daher Glassubstrate den kostengünstiger zu strukturierenden organischen Materialien vorzuziehen.

Ein Verfahren zur Herstellung DOE aus Glas ist in der US-PS 4,765,714 beschrieben.

Bei dem bekannten Verfahren wird ein Substrat aus Glas mit einem Photoresist beschichtet. Die Photoresistschicht wird durch eine Maske in definierten Bereichen, die der zu erzeugenden Reliefstruktur entsprechen, belichtet und in an sich bekannter Weise entwickelt. Mittels eines Trockenätzverfahrens wird schließlich das Substratglas in den vom Photoresist befreiten Bereichen der Substratoberfläche zur Erzeugung der Reliefstruktur abgetragen. Anschließend werden die nicht belichteten Bereiche des Photoresist entfernt. Das fertige Produkt ist ein auf der Oberfläche strukturiertes DOE aus Glas.

Es ist bekannt, daß Trockenätzverfahren zur Erzeugung feiner geometrischer Muster von hoher Dichte in metallischen oder nichtmetallischen Substratoberflächen besonders gut geeignet sind. Gegenüber den naßchemischen Ätzverfahren haben sie den Vorteil, daß sich sehr exakte anisotrope Ätzstrukturen realisieren lassen. Dies ist insbesondere dann wichtig, wenn das Aspektverhältnis (= Strukturtiefe:Strukturabstand) das Verhältnis 1 : 10 überschreitet. Der Materialabtrag erfolgt lediglich senkrecht zur Substratoberfläche und nicht, wie bei den naßchemischen Verfahren üblich, isotrop, d. h. auch an den seitlichen Begrenzungswänden der eingeätzten Vertiefungen.

Nachteilig an dem bekannten Verfahren zur Herstellung eines DOE's unter Einsatz eines Trockenätzverfahrens ist jedoch, daß die Einstellung einer über die gesamte Substratoberfläche einheitlichen Strukturtiefe sehr schwierig ist. Abweichungen von nur 5 % in der Strukturtiefe eines DOE's werden noch als tolerierbar angesehen. Wird der Wert von 5 % überschritten, findet eine deutliche, häufig nicht mehr tolerierbare Abnahme der Beugungseffizienz statt.

Üblicherweise setzt die Einstellung einer gleichmäßigen Ätztiefe eine aufwendige Justierarbeit voraus. Voraussetzung für eine einheitliche Ätztiefe ist, daß der Ionenstrahl über die gesamte Strahlquerschnittsfläche, die etwa 100 cm$^2$ betragen kann, homogen sein muß, um eine unterschiedliche Ätzrate durch Bereiche mit höherer bzw. niedrigerer Ionenstrahlintensität zu vermeiden. Diese Einstellung einer über die gesamte Substratoberfläche einheitlichen Ionenstrahlintensität kann nur in zeit- und kostenaufwendigen Vorversuchen erfolgen, in welchen der Ionenstrahl über seine gesamte Querschnittsfläche vermessen und über die Verfahrensparameter nachreguliert werden muß. Darüber hinaus muß, da eine Endpunktkontrolle nicht existiert, die zu dem jeweils verwendeten Glas zugehörige Ätzrate vor der Durchführung des eigentlichen Ätzverfahrens ebenfalls in Vorversuchen zuverlässig bestimmt werden, um eine möglichst genaue Einstellung der Ätztiefe über die Zeitdauer des Ionenbeschusses zu ermöglichen.

Nachteilig ist weiterhin, daß die Ätzraten bei den üblicherweise verwendeten Substratgläsern sehr niedrig sind und hieraus für die bei den bei DOE'n erforderlichen Strukturtiefen, die im Bereich der Wellenlänge des in der Struktur zu verarbeitenden Lichtes liegen, (≈ λ) sehr lange Ätzzeiten resultieren (etwa 1,5 - 1,6 h bei einer üblichen Ätzrate von 5 nm/min.). Die Ätzzeiten wiederum müssen mit hoher Genauigkeit eingehalten werden, um eine vorgegebene Ätztiefe einzustellen (< 1 min., bei möglichst gutem Strahlprofil). Abweichungen von nur 10 % bei der Strahlintensität führen zu Abweichungen in der Strukturtiefe von bis zu 45 nm.

Bei der Ausbildung sehr flacher Strukturen (Strukturtiefen < 30 nm) ist ist eine zuverlässige Ätztiefenkontrolle über eine eingestellte Ätzzeit nicht möglich. Gläser, insbesondere wirtschaftlich günstige Substratgläser, wie technische Gläser oder Floatglas, weisen eine bis zu mehrere nm dicke (in der Dicke und Zusammensetzung über die Oberfläche variierende) Oberflächenschicht auf, innerhalb welcher die Zusammensetzung deutlich vom Massivmaterial abweicht. Diese Oberflächenschicht, die von der Herstellung des Glases (aufgrund von Segregations- oder Verdampfungseffekten einzelner Glasbestandteile), vom Reinigen (durch Auslaugung oder selektiven Abtrag) oder auch vom Bearbeiten, z. B Polieren, herrühren kann, führt zu einer unkontrollierbaren zeitlichen und örtlichen Beeinflussung der Ätzrate, was insbesondere bei den oben angesprochenen sehr flachen Strukturen sehr große relative Fehler in der Strukturtiefe zur Folge hat.

Solche flachen Reliefstrukturen finden beispielsweise Verwendung bei sog. Gitterkopplern zum Ein- und Auskoppeln von Licht bei integriert-optischen Elementen, speziell bei Oberflächensensoren. Allgemein bezeichnet man als Gitterkoppler eine Vorrichtung zur Umwandlung von geführten in frei propagierende Lichtwellen (leaky modes). Ein Gitterkoppler besteht daher mindestens aus einem optischen Wellenleiter und einem Gitter, wobei der Wellenleiter auf einem Substrat und das Gitter bei Oberflächensensoren an oder nahe einer der Grenzflächen des Wellenleiters angeordnet werden kann. Daneben gibt es in der Sensorik einen Sprachgebrauch, optische Transducer, die Änderungen chemischer oder physikalischer Größen nahe der Wellenleiteroberfläche in Änderungen der Koppelbedingungen transformieren als Gitterkoppler zu bezeichnen. Als Meßgrößen sind hierbei i.a. entweder die Lage und/oder die Phase und/oder die Intensität (s. z.B. K. Tiefenthaler und W. Lukosz a. a. O.) des ausgekoppelten Lichtes zu registrieren, d.h. Sensoren, die auf dem Nachweis der Änderungen von Ein- bzw. Auskoppelwinkel beruhen, werden ebenfalls als Gitterkoppler bezeichnet.

Die Verwendung von strukturierten, planaren Wellenleitern in optischen Oberflächensensoren ist u.a. in K. Tiefenthaler und W. Lukosz: "Integrated Optical Switches And Gas Sensors", Optics Letters, Vol. 9, No. 4, 1984, 137 - 139, beschrieben. Zwar ist die Ein- und/oder Auskopplung von kohärentem Licht in einen Wellenleiter durch die Stirnseiten eines planaren Wellenleiters bekannt (s. z. B. W. Lukosz: WO 8907756 bzw. EP 8800108); doch erfordert dies eine hohe optische Qualität der Stirnseite, um entweder eine hohe Einkoppeleffizienz und/oder einen möglichst gerichteten Auskopplungsstrahl zu erreichen. Weitere Probleme bereitet der Einsatz von Durchflußzellen, da die Dichtung der Durchflußzelle nicht den oder die laufenden Mode(n) beeinträchtigen darf.

Zweckmäßigerweise werden daher Gitterstrukturen sowohl zur Einkopplung, als auch zur Auskopplung des Lichtes verwendet. Je nach Art der Auslegung der Gitterkopplers werden Strukturtiefen, d. h. Gittertiefen zwischen 2 und 30 nm gewählt. So beschreibt z. B. die EP 0 455 067 ein im wesentlichen bidiffraktives Gitter welches die hintergrundfreie Detektion der Lage und/oder der Intensität eines ausgekoppelten Strahles erlaubt. Das binäre Gitter besteht aus einer Überlagerung zweier Gitter mit unterschiedlicher Periode. Derartige Gitter werden bevorzugt mit einer Gittertiefe von < 10 nm hergestellt.

Bei diesen sehr flachen Gitterstrukturen sind ungewöhnlich enge Toleranzen von < 3 nm, vorzugsweise < 1 nm, einzuhalten. Damit ergeben sich Anforderungen an die Einhaltung vorgegebener Strukturtiefen in der Größenordnung von nur wenigen Atomlagen.

Die Einrichtung konstanter geometrischer Bedingungen, insbesondere einer konstanten Gittertiefe, ist für Gitterkoppler insbesondere deswegen wichtig, weil:

1. die Koppeleffizienzen quadratisch von der Gittertiefe abhängen,
2. die Gittertiefe die effektive Modenbrechzahl im sensitiven Bereich direkt beeinflußt

und die beiden Effekte damit direkt Einfluß auf die Sensorcharakteristik nehmen.

Nach dem Stand der Technik werden auch für die Herstellung dieser Gitter Ätzprozesse eingesetzt. Erfolgt die Darstellung eines Gitters in eine Oberfläche aus einem anorganischen Material, so wurden in der Regel auch in diesem Anwendungsfall die eingangs erwähnten, aufwendigen und kostenungünstigen Trockenätzprozesse verwendet.

Nach dem Stand der Technik (M. T. Gale et al., SPIE 1272, (1990), S.60ff.) wird z.B. eine bidiffraktionelle Gitterstruktur mittels photolithographischer Methoden als Überlagerung zweier Rechteckgitter in einer Glasoberfläche bzw. in einer Wellenleiteroberfläche realisiert. Hierzu wird das zu strukturierende Substrat mit einem Photolack beschichtet. Dieser wird sodann in einem weiteren Schritt durch holographische Belichtung mit anschließender Entwicklung mit einem gewünschten Teilgitter (a) versehen. Dieses wird ferner unter einem schrägen Winkel mit Au beschattet, so daß in einem weiteren Trockenätzschritt die beschattete Resiststruktur in das zu strukturierende Substrat übertragen wird. Anschließend wird das einzustellende Teilgitter (b) nochmals durch Wiederholung der gesamten Prozedur eingestellt.

Die Ausbeute zur Herstellung von z. B. flachen, bidiffraktiven Gitter; wobei die Teilgitter mit identischer Teilgittertiefe gefertigt werden müssen, ist sehr gering. Deshalb wird das bekannte Verfahren wirtschaftlich nur für Gitter mit einer Tiefe von > 30 nm angewendet.

Als wirtschaftlich vorteilhaft erweist sich in der Regel die Verwendung großer Substratflächen (> 3"), da hiermit in einer einzigen Prozeßfolge eine Vielzahl von integriert-optischen Elementen hergestellt werden können. Es ist aber aus den oben erwähnten Gründen schwierig und aufwendig, in Trockenätzprozessen eine hohe laterale Reproduzierbarkeit in der Gittertiefe zu erreichen.

Diese Schwierigkeiten werden gemäß EP-A 0 424 110, die den Oberbegriff der neuen unabhängigen Ansprüche 1 und 2 bildet, dadurch überwunden, daß beim Einbringen einer Gitterstruktur in die Oberfläche eines DOE's durch Ätzen vor dem Aufbringen der Maske in dem Substrat zur Einstellung einer definierten Ätztiefe in einem definierten Abstand von der Substratoberfläche, welcher der einzustellenden Strukturtiefe entspricht, eine Grenzfläche zwischen zwei Materialien mit unterschiedlichem Ätzverhalten erzeugt wird, die als Ätzstop ausgenutzt wird. Gemäß der Druckschrift wird die Grenzfläche durch Aufbringen einer Beschichtung aus einer oder mehreren Schichten aus einem oder mehreren anderen leicht ätzbaren anorganischen Materialien auf das Substrat vor dem Aufbringen der Maske erzeugt, wobei die Dicke der Beschichtung bzw. der Einzelschichten der Dicke der einzubringenden Reliefstruktur bzw. -strukturen entspricht. Die Grenzfläche(n) zwischen Beschichtung und Substrat bzw. zwischen Einzelschichten wird (werden) bei dem bekannten Verfahren als Ätzstop ausgenutzt.

Weiterhin ist aus der US-PS 4,343,890 ein Verfahren zur Herstellung von DOE's bekannt, bei dem auf ein Substrat aus beispielsweise LiTaO$_3$ ein Beugungsgitter aufgebracht wird. Dazu wird das Substrat zunächst mit einer dünnen Metallschicht (z. B. aus Nb) bedeckt, in die dann photolithographisch ein Gitter geätzt wird. Der geätzte Metallfilm wird danach oxidativ in das Metalloxid übergeführt.

In einer bevorzugten Ausführungsform entspricht die Strukturtiefe des Beugungsgitters der Dicke des Metalloxidfilms.

Gleiches gilt auch für das in der EP-A 0 507 491 beschriebene Verfahren, ebenfalls zur Herstellung von DOE's. Gemäß diesem Verfahren wird auf ein Substrat (z. B. aus LiNbO$_3$) eine leitfähige Schicht (z. B. aus ITO) aufgebracht und sodann nach Auftragen eines Elektronenstrahl-empfindlichen Lacks und Elektronenstrahlbelichtung mit anschließendem Ätzen ein Gittermuster in dieser Schicht hergestellt. Die leitfähige Schicht verhindert bei diesem Verfahren elektrostatische Aufladungen während der Elektronenstrahlbelichtung und damit unerwünschte Verzerrungen der mittels des Elektronenstrahls erzeugten Struktur.

Auch in dieser Schrift wird ein Ausführungsbeispiel gezeigt, bei welchem die Strukturtiefe des Gitters der Dicke der leitfähigen Beschichtung entspricht.

Aufgabe der Erfindung ist, die bekannten Verfahren so weiterzubilden daß sie einfach und kostengünstig durchzuführen sind und geeignet sind, selbst flache Strukturen auch über größere Flächen mit einheitlicher Strukturtiefe reproduzierbar herzustellen.

Diese Aufgabe wird mit den Verfahren mit allen Merkmalen der Patentansprüche 1 und 2 gelöst. Eine bevorzugte Verwendung der nach den erfindungsgemäßen Verfahren hergestellten strukturierten Substrate ist in Anspruch 12 beschrieben.

Mit den erfindungsgemäßen Verfahren sollen insbesondere flache Reliefstrukturen mit folgenden vorteilhaften Eigenschaften realisiert werden:

* Es können binäre Strukturen hergestellt werden. Dies hat den Vorteil, daß mit einer Prozeßabfolge die vollständige Struktur herstellbar ist.

* Die Strukturen können reproduzierbar auf 2 - 30 nm mit Toleranzen von +/-10-15 % eingestellt werden.

* Es können Strukturen mit nur geringen statistischen Oberflächenrauhigkeiten hergestellt werden die beispielsweise als Koppelelemente für integriert optische Elemente verwendbar sind.

* Es können Substrate mit harten Oberflächen strukturiert werden, die beispielsweise als Abformwerkzeug zur Herstellung von strukturierten Kunststoffsubstraten geeignet sind.

* Bei Verwendung der strukturierten Substrate als Bestandteil eines Sensorelements können kostengünstige Substrate verwendet werden. Da auch das Verfahren wirtschaftlich arbeitet, können auf diese Weise die Kosten für ein Sensorelement wesentlich gesenkt werden.

Bei den erfindungsgemäßen Verfahren wird, wie auch aus dem eingangs genannten Stand der Technik bekannt, zur Erstellung einer definierten Ätztiefe vor dem Aufbringen der Maske in dem Substrat in einem definierten Abstand von der Substratoberfläche, welcher der einzustellenden Strukturtiefe entspricht, eine Grenzfläche zwischen zwei verschiedenen Materialien mit unterschiedlichem Ätzverhalten erzeugt, die als Ätzstop ausgenutzt wird. Die vorliegende Erfindung macht sich damit die Vorteile des bekannten Verfahrens zunutze. Beide Materialien können beispielsweise so ausgewählt sein, daß die Ätzrate bei Erreichen der Grenzfläche sprunghaft abnimmt. Örtliche Schwankungen in der Ätztiefe können damit in einfacher Weise ausgeglichen werden: in Substratbereichen, in welchen das Substratmaterial schon bis zur Grenzfläche abgetragen ist, findet aufgrund des starken Abfalls der Ätzrate praktisch kein Materialabtrag mehr statt, während in den Bereichen, in welchen die Grenzfläche noch nicht erreicht ist, der Ätzprozeß ungehindert fortschreitet. Die Genauigkeit, mit welcher eine definierte Ätztiefe auch über größere Flächen bzw. reproduzierbar eingestellt werden kann, hängt somit nicht von den Verfahrensparametern des Ätzprozesses, noch, was insbesondere bei flachen Reliefstrukturen von Bedeutung ist, von Schwankungen in der chemischen Zusammensetzung des Materials auf der Substratoberfläche ab, sondern davon, mit welcher Genauigkeit in einem definierten Abstand von der Substratoberfläche die oben erwähnte Grenzfläche zwischen zwei Materialien mit unterschiedlichen Ätzverhalten erzeugt werden kann.

Auch wenn in dieser Beschreibung überwiegend von einem Ätzstop durch eine Ätzratenänderung die Rede ist, besteht eine weitere Möglichkeit, diese Grenzfläche als Ätzstop auszunutzen, noch darin, daß bei Erreichen dieser Grenzfläche kein automatischer Eingriff auf den Ätzprozeß erfolgt, sondern daß ein Signal gegeben wird, das als Stopsignal für den Ätzprozeß ausgenutzt werden kann. Beispielsweise ist es möglich, bei einem Trockenätzverfahren, bei welchem sich über der zu ätzenden Fläche ein Plasma bildet, die Änderung der von dem Plasma ausgesandten Strahlung, z.B. der sog. Plasmafarbe, die für jedes Material charakteristisch ist, als Stopsignal zur Beendigung des Ätzprozesses zu verwenden.

Nach der Erfindung sind zwei verschiedene Möglichkeiten vorgesehen, in dem Substrat einen Materialübergang, so wie oben beschrieben, zu erzeugen. Gemäß einer Variante ist vorgesehen, bestimmte Bestandteile des Substratmaterials in oberflächennahen Bereichen bis zu einer bestimmten Tiefe herauszulaugen. Dieses Verfahren hat zwar den Vorteil, daß für Substrat und zu strukturierende "Schicht" im Prinzip nur ein- und dasselbe Material verwendet wird, es ist jedoch weniger bevorzugt, da es schwierig ist, über größere Flächen eine einheitliche "Auslaugtiefe" zu erreichen.

Die bevorzugte Verfahrensvariante besteht erfindungsgemäß darin, das Substrat zur Erzeugung der Grenzfläche zwischen den Materialien mit unterschiedlichem Ätzverhalten mit einer sogenannten Ätzstopbeschichtung und einer weiteren zu strukturierenden Beschichtung zu versehen, wobei die Dicke der zu strukturierenden Beschichtung der Strukturtiefe der Reliefstruktur entspricht. Dadurch ist es möglich, auch gegenüber dem Ätzangriff empfindlichere Materialien, z. B. solche mit besonderen optischen und chemischen Eigenschaften, als Substrat zu verwenden. Bei der Verwendung der strukturierten Substrate als Diffraktive Optische Elemente, bei welchen sowohl das Substrat als auch die Beschichtungen aus Glas oder Glaskeramik bestehen, sollte die Zwischenschicht, die als Ätzstop dient, möglichst dünn und möglichst porenfrei sein. Je dicker die Zwischenschicht wird, desto besser muß bei herkömmlichen DOE'n ihr Brechungsindex dem der Beschichtung und dem des Substratglases angepaßt sein. Bei genügender Dünne der Zwischenschicht, bevorzugt dünner als λ/4 (λ = Wellenlänge des zu verarbeitenden Lichtes), können auch gegen Ätzung sehr widerstandsfähiger Schichten, die ansonsten wegen ihres Brechungsindexes im allgemeinen nicht sonderlich geeignet sind, z. B. $Al_2O_3$, Verwendung finden.

Da, wie aus dem Stand der Technik bekannt, auch gemäß der Erfindung der Ätzstop in der Regel über eine Ätzratenänderung erfolgt, muß in diesem Fall die Ätzrate der Auslaugschicht bzw. der Beschichtung wesentlich höher sein, als die des nichtausgelaugten Substrats bzw. der Ätzstopschicht. Die Strukturierung wird gemäß der ersten Verfahrensvarianten in die Auslaugschicht, gemäß der letzteren in die auf die Ätzstopschicht aufgebrachte weitere Beschichtung eingebracht, d. h. die Strukturtiefe der Reliefstruktur entspricht bei dem erfindungsgemäßen Verfahren der Dicke der Auslaugschicht bzw. der auf das Substrat mit Ätzstopbeschichtung aufgebrachten weiteren Beschichtung. Dadurch, daß sich die Ätzrate beim Übergang auf die nicht ausgelaugten Substratbereiche bzw. die Ätzstopschicht erheblich erniedrigt, müssen die Ätzzeiten, um eine definierte Strukturtiefe zu erhalten, nicht mit der Genauigkeit eingehalten werden, die sich aus der höheren Ätzrate der Beschichtung ergeben würde. Hieraus resultiert, wie auch im Stand der Technik angegeben ist, eine erhebliche Vereinfachung der Verfahrensführung.

Desgleichen lassen Inhomogenitäten in der Ionenstrahlenintensität bzw. in der Verteilung der Reaktivspezies beim reaktiven Ätzen die Gleichmäßigkeit der Strukturtiefe weitgehend unberührt. In den Bereichen mit hoher Strahlintensität bzw. hoher Konzentration an Reaktivspezies ist die vollständige Ätzung der Beschichtung früher beendet, als in solchen Bereichen, in denen die Strahlintensität bzw. die Konzentration niedriger ist. Es kann jedoch ohne Probleme solange geätzt werden, bis auch die Bereiche, in denen eine langsamere Ätzung erfolgt vollständig bis auf das Substrat geätzt sind, weil beim Übergang auf das Substrat die Ätzung auf diesem so langsam erfolgt, daß die gewünschte Geometrie noch mit hoher Genauigkeit eingehalten wird. So können auch bei inhomogener Strahlqualität bzw. Verteilung der Reaktivspezies hochwertige diffraktive Strukturen erzeugt werden.

Es liegt auf der Hand, daß sich die oben beschriebenen Vorteile um so stärker bemerkbar machen, je größer der Unterschied in dem Ätzverhalten der verwendeten Materialien ist.

Eine mehr oder weniger starke, sprunghafte Änderung der Ätzrate beim Übergang vom Beschichtungsmaterial zur Ätzstopschicht, bzw. vom ausgelaugten zum nicht ausgelaugten Substratbereich garantiert somit eine einfache und zuverlässige Ätztiefenkontrolle. Im anzustrebenden Idealfall geht die Ätzrate nach der Abtragung des Beschichtungsmaterials gegen 0, so daß die Einstellung einer einheitlichen definierten Strukturtiefe völlig unabhängig von der Überschreitung der für den Materialabtrag erforderlichen Mindestätzzeit ist.

Weist zusätzlich die Auslaugschicht, bzw. das Beschichtungsmaterial noch eine möglichst hohe Ätzrate auf, so ist darüber hinaus noch ein schneller Verfahrensablauf gewährleistet. Als wesentlicher Ätzratenunterschied wird dabei ein Faktor von größer 10, vorzugsweise 50, bezeichnet.

Die vorliegende Erfindungsbeschreibung stellt im folgenden der Einfachheit halber überwiegend auf eine Ätztiefenkontrolle durch das Aufbringen einer Ätzstopschicht und einer zu strukturierenden Beschichtung auf ein Ausgangssubstrat ab. Das in diesem Zusammenhang Gesagte gilt sinngemäß, soweit anwendbar, aber auch für "ausgelaugte" Substrate.

Vorzugsweise werden die Beschichtungen mittels eines PVD-, CVD- oder SOL-GEL-Verfahrens aufgebracht. Diese Beschichtungsverfahren sind erprobt und liefern je nach Verfahrensparametern im Vergleich zum Massivmaterial porosere Dielektrika unterschiedlicher Morphologie. Die Verfahren können in einfacher Weise so geführt werden, daß die Porendurchmesser kleiner als die verwendete Lichtwellenlänge sind, so daß sich die Porosität der Beschichtung optisch nicht bemerkbar macht. Vor Aufbringen der Beschichtung kann das Substrat noch einer Feinpolitur unterzogen werden, um Oberflächendefekte einzuebnen.

Als besonders geeignet haben sich gepulste Plasma- und Laser- CVD-Verfahren erwiesen, bei denen es möglich ist, glatte, dichte und harte Oxid- und Nitridschichten von Si, Al, Ti und Ta bei niedriger Substrattemperatur ohne in-situ Schichtdickenkontrolle reproduzierbar abzuschneiden. Derartig hergestellte Schichten weisen Oberflächenrauhigkeiten von < 0.8 nm RMS auf. Die Verwendung von Schichten niedriger Oberflächenrauhigkeit ist für die Anwendung als integriert-optisches Element, beispielsweise als Oberflächensensor, notwendig um die Streuung von geführten Lichtwellen an der Grenzflächenrauhigkeit zwischen (strukturiertem) Substrat und Wellenleiter zu minimieren. Vorzugsweise sollten die Schichten daher Oberflächenrauhigkeiten von < 2,5 nm RMS, stärker bevorzugt < 1,5 nm RMS aufweisen. Insbesondere sollten die Schichten amorph sein.

Des weiteren sollte die zu strukturierende Schicht bei Verwendung in einem Oberflächensensor nicht identisch mit der wellenleitenden Schicht sein, da sonst die Gitterfunktion zu stark geschwächt wird. Sie sollte eine niedrige Brechzahl besitzen. Die Ätzstopschicht sollte ebenfalls eine niedrige Brechzahl aufweisen, wenn ihre Dicke vergleichbar zur Austrittshöhe des evanescenten Feldes (30 - 100 nm) ist.

Die oben erwähnten Verfahren zur Herstellung von Beschichtungen sind an sich bekannt und in der Patent- sowie in der sonstigen Literatur hinreichend beschrieben. Es hat sich nun gezeigt, daß die Verwendung eines gepulsten Plasma-CVD-Verfahrens die reproduzierende Herstellung ätzselektiver Schichten mit einer Schichtdicke von 3.5 nm auf einer Fläche von 120 mm Durchmesser mit einer Schichtdickengleichmäßigkeit und -reproduzierbarkeit von < 10 % gestattet. Unter Verwendung eines solchen Verfahrens hergestellte Schichten erlauben die Herausstellung von flachen, binären Reliefstrukturen in dieser Schicht, wie sie z. B. für Oberflächensensoren benötigt werden.

Als Ätzverfahren sind je nach Verwendung der nach dem erfindungsgemäßen Verfahren hergestellten Erzeugnisse Trockenätzverfahren und/oder naßchemische Ätzverfahren geeignet.

Für die Verwendung der strukturierten Substrate als "herkömmliche" DOE sind nur Trockenätzverfahren geeignet. Aufgrund der üblicherweise zu geringen Strukturabstände (Aspektverhältnis > 1 : 10) scheiden naßchemische Ätzverfahren wegen der bereits eingangs erwähnten Untergrabung der Struktur an den seitlichen Begrenzungswänden aus.

Durch Anwendung eines sog. reaktiven Trockenätzverfahrens kann die Erzeugung der Reliefstruktur noch beschleunigt werden, wenn man eine Beschichtung aus einem Material wählt, das einem Angriff der reaktiven Ätzgase wenig standhält. Bei dem reaktiven Ionenätzen findet der Abtrag der Beschichtung sowohl durch physikalischen als auch durch einen chemischen Ätzangriff statt. Als Ätzgase werden je nach dem wegzuätzenden Material z. B. Fluor-haltige und/oder Chlor-haltige Gase (z. B. $CHF_3$, $C_2F_6$, $Cl_2$, $CHClF_2$ usw.) verwendet. Reaktives Ionenätzen ist beispielsweise in M. Heißmeier, B. Manzke, Lithographic Processing Using Reactive Ion Etching, University of Erlangen (1990) beschrieben. Wird ein Substrat bzw. eine Zwischenschicht verwendet, das bzw. die gegen den chemischen Angriff weitgehend resistent ist, so läßt sich der Ätzstop noch weiter verbessern. Mit reaktiven Ionenätzen wurde bei einer durch das Sol-Gel-Verfahren erzeugten $SiO_2$ -Schicht bei Verwendung von $CH_3F$ als Reaktionsgas die Ätzrate gegenüber dem reinen Ionenätzen mit ausschließlich mechanischem Abtrag um den Faktor 3 erhöht (Ionenätzen: 5 nm/min.; reaktives Ionenätzen 15 nm/min.). Weitere geeignete Ätzverfahren sind in S. Wolf, R.N. Tauber, "Silicon Processing for the VLSI era", Lattice Press, California, beschrieben.

Im Falle flacher Reliefstrukturen (< 30 nm) mit vergleichsweise großen Strukturabständen ( > 300 nm), wie sie für Gitterkoppler für optische Oberflächensensoren bzw. für Prägestempel zu deren Herstellung benötigt werden, können auch naßchemische Ätzverfahren eingesetzt werden, da sich aufgrund der großen Abstände im Vergleich zur Strukturtiefe das isotrope Ätzverhalten noch nicht schädlich auswirkt.

Dem Fachmann ist es leicht möglich, geeignete Gläser für die DOE aufzufinden, mit denen das erfindungsgemäße Verfahren durchführbar ist. So ist z. B. bekannt, daß poröses Glas oder Gläser unterschiedlicher Morphologie (z.B. mit kristallisierten Teilbereichen) eine wesentlich höhere Ätzrate beim Ionenätzverfahren besitzen bzw. besitzen können als massives Glas. Durch Erzeugung von Beschichtungen unterschiedlicher Morphologie lassen sich somit in einfacher Weise selbst bei gleicher Zusammensetzung Schichten mit unterschiedlichen Ätzraten erzeugen. Im übrigen werden, wie oben beschrieben, reaktive Trockenätzverfahren bevorzugt.

Die Verwendung optischer Gläser für die Beschichtungen und das Substrat für DOE ist zu bevorzugen, da optische Gläser bzgl. ihrer optischen Eigenschaften eine hohe Homogenität besitzen. Insbesondere werden optische Gläser mit einem hohen Brechungsindex, vorzugsweise größer als 1,5 bevorzugt, da dann geringere Strukturtiefen ausreichen. Dies wirkt sich wiederum positiv auf die Ätzzeiten aus. Zwischen Brechungsindexdifferenz $\Delta n$ (zwischen Schicht und umgebendem Medium; Luft: n = 1) und geforderter Strukturtiefe d gilt der Zusammenhang $d = \lambda/(2 \times \Delta n)$.

Der Brechungsindex der Beschichtung bzw. der Auslaugschicht (die Ätzstopschicht ist, wie oben erwähnt, weniger kritisch) sollte vorteilhafterweise an den des Substratglases angepaßt sein, damit es an den Grenzflächen zwischen Beschichtung bzw. Auslaugschicht und Substrat nicht zu Reflexionsverlusten kommt. Als Substratmaterialien werden bevorzugt hochbrechende optische Gläser verwendet, insbesondere solche, die einen hohen Anteil an netzwerkbildenden Oxiden, wie z. B. PbO oder $La_2O_3$, besitzen. Solche Gläser können aufgrund ihrer Resistenz gegenüber reaktiven Ätzgasen mit Erfolg bei Anwendung eines reaktiven Ionenätzverfahrens eingesetzt werden.

Als Beschichtung sind sowohl Einfachschichten wie z. B. $SiO_2$, $TiO_2$, $ZrO_2$, oder $SnO_2$, insbesondere aber Mischschichten aus $SiO_2$ / $TiO_2$, $SiO_2$ / $Ta_2O_5$, $SiO_2$ / $ZrO_2$ und/oder $SiO_2$ / $SnO_2$ geeignet. Diese Mischschichten aus hoch- und niedrigbrechenden Materialien können in an sich bekannter Weise mit den oben beschriebenen Beschichtungsverfahren hergestellt werden. Über die Anteile an hoch- bzw. niedrigbrechenden Oxiden ist eine Anpassung des Brechungsindex der Beschichtung an den des Substratmaterials leicht möglich. Darüber hinaus zeigen diese Materialien, insbesondere die Einfachschichten, bei angepaßtem Reaktivgas hohe Ätzraten beim reaktiven Ionenätzen. Bei Einfachschichten kann nämlich das Reaktionsgas in seiner Ätzwirkung besonders gut an das Schichtmaterial angepaßt werden.

Es liegt auf der Hand, daß bei Verwendung einer Ätzstopschicht Substrate aus leicht ätzbaren Gläsern zum Einsatz kommen können. Das Substrat kann nach der Erfindung ohne weiteres auch aus einem Schichtenpaket unterschiedlicher Gläser auf einer Unterlage bestehen, soweit nur die zuvor beschriebene Bedingung eingehalten wird.

Das erfindungsgemäße Verfahren kann ohne weiteres auf beliebig geformte, insbesondere sphärisch oder asphärisch gewölbte Substrate zur Herstellung von Hybridoptiken angewandt werden. Als Beschichtungen sind auch Mehrfachinterferenzschichtsysteme, hier als Kombination von Interferenz- und Beugungsoptik denkbar. Das erfindungsgemäße Verfahren gibt dem Designer eine hohe Flexibilität in der Berechnung und Konstruktion von DOE'n, auch von solchen mit flacher Gitterstruktur.

Im Falle der Verwendung eines nach dem erfindungsgemäßen Verfahren strukturierten Substrats als Gitterkoppler für Oberflächensensoren wird vorzugsweise ein Substrat aus Glas verwendet, wobei neben Quarzglas auch wirtschaftlich vorteilhaft technische Gläser eingesetzt werden können. Bei Verwendung für einen Oberflächensensor ist für eine ggf. vorzunehmende Vereinzelung in Chips die Verwendung eines Dünnglases besonders vorteilhaft. Als Beispiel für ein alkaliarmes Glas sei das AF45-Glas der Deutschen Spezialglas AG genannt. Daneben ist aber aus wirtschaftlichen Gründen die Verwendung von Floatglas besonders vorteilhaft.

Die zu strukturierende Beschichtung sollte aus $SiO_2$, $TiO_2$, $Al_2O_3$, $ZrO_2$, $HfO_2$, $Si_3N_4$ oder aus Mischungen dieser Oxide bestehen, da deren Ätzraten bei geeigneter Zusammensetzung des Ätzmediums wesentlich höher als die eines Glassubstrats oder einer Ätzstopschicht aus einem anderen als den genannten Materialien sind.

Wird die Änderung der Plasmafarbe als Ätzstopsignal ausgenutzt, dann sollte eine Ätzstopbeschichtung ein anderes chemisches Element als die zu ätzende Schicht enthalten, welches Anlaß zu einer spektral unterschiedlichen Emissionslinie gibt. Die Wahl der geeigneten Ätzbedingungen sind dem mit dem Stand der Technik auf diesem Gebiet vertrauten Fachmann wohlbekannt.

Nach der Erfindung ist insbesondere vorgesehen, die nach dem erfindungsgemäßen Verfahren hergestellten strukturierten Glassubstrate als Abformwerkzeuge zur Strukturierung von Kunststoffen einzusetzen. Auf diese Art und Weise lassen sich insbesondere flache Gitterstrukturen mit hoher Präzision auf einfache Weise auch auf Kunststoffsubstrate übertragen, die dann ihrerseits zur Herstellung von Oberflächensensoren mit Gitterkoppler auf der Basis von Kunststoffsubstraten mit anorganischer Beschichtung, so wie in der DE 42 28 853 C2 beschrieben, verwendet werden können.

Bei Verwendung der strukturierten Substrate als Abformwerkzeug, z. B. als Glasmaster oder auch direkt als Prägestempel ist folgendes zu beachten:

*   Die Oberfläche des Abformwerkzeugs sollte eine Mohshärte von $\geq 6$ aufweisen, um eine möglichst lange Standzeit des Werkzeugs zu gewährleisten.

*   Da die Grenz- und Oberflächen bei beschichteten Substraten, die in Oberflächensensoren Verwendung finden sollen, möglichst glatt sein sollten, bestehen vergleichbare Anforderungen auch bzgl. der Oberflächen der Abformwerkzeuge, da etwa vorhandene Rauhigkeiten in die Kunststoffoberfläche miteingeprägt werden.

Die Wahl geeigneter Materialien bzw. Abmessungen für die Werkzeuge ist bei Einhaltung der obigen Bedingungen unkritisch und kann dem Fachmann überlassen werden.

Nachfolgend wird die Erfindung anhand der Figuren und der Ausführungsbeispiele näher erläutert.

Es zeigt:

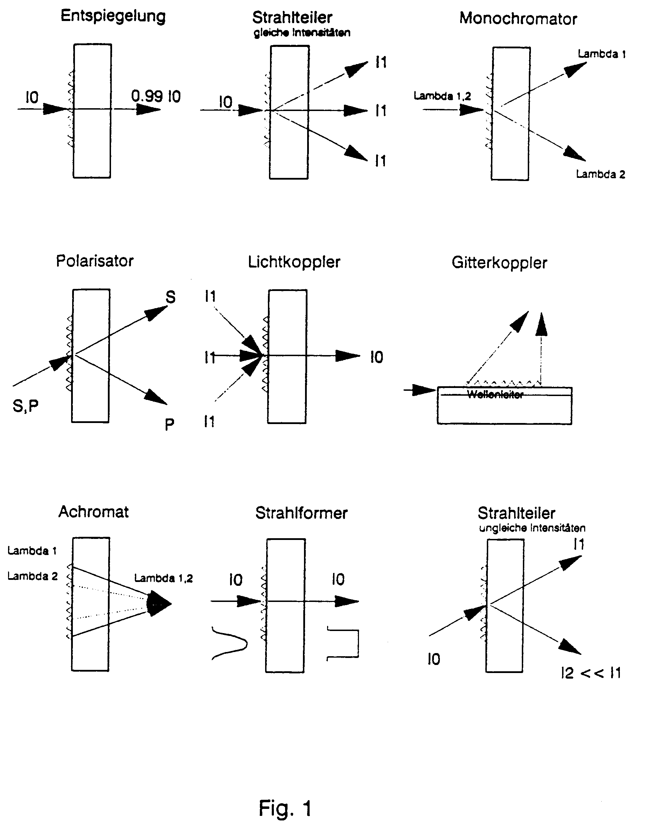

Figur 1    beispielhaft einige mögliche Anwendungen diffraktiver optischer Elemente.

Figur 2    in einer schematischen Darstellung ein Ablaufdiagramm für die Durchführung des erfindungsgemäßen Verfahrens, zur Herstellung eines DOE's.

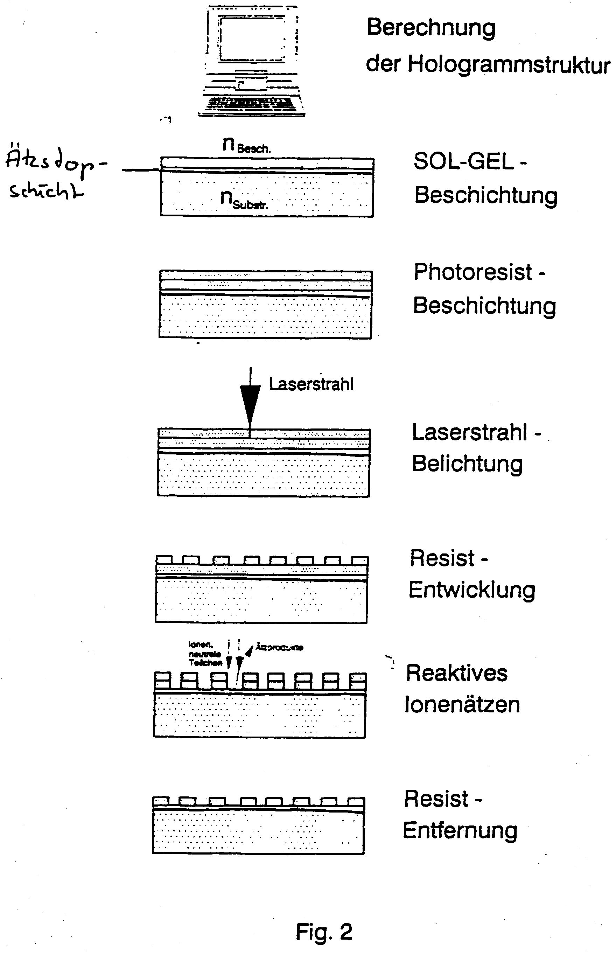

Man erkennt in Figur 2, daß ein Glassubstrat mit einer Ätzstopschicht und einer weiteren SOL-GEL-Beschichtung versehen wurde. Die Dicke der SOL-GEL-Beschichtung entspricht der einzustellenden Strukturtiefe. Beschichtung und Substrat weisen die Brechzahlen $n_{Besch.}$ und $n_{Substr.}$ auf, die vorzugsweise aneinander angepaßt sind. Anschließend erfolgt die Beschichtung mit einem Photoresist zur Maskenherstellung. Prinzipiell sind alle bekannten Resistmaterialien geeignet, z. B. auch Shipley AZ 1350, Hoechst AZ 1470.

Der Resist kann direkt mittels Laserstrahl oder Elektronenstrahl belichtet werden. Die Berechnungsdaten aus der Strukturberechnung mittels eines Computers werden zuvor auf den Laserscanner übertragen. Dieses Belichtungsverfahren ist sinnvoll, wenn unterschiedliche DOE-Typen gefertigt werden müssen. Bei Massenproduktion empfiehlt sich die Belichtung durch eine Photomaske.

Nach der Entwicklung und Ätzung des Photoresist, die in an sich bekannter Weise durchgeführt werden, erfolgt der eigentliche Strukturierungsprozeß durch Reaktives Ionenätzen. Der Resist ist gegenüber dem Ätzmedium weitgehend stabil. Die Ätzung der Schicht erfolgt bis zur Ätzstopschicht. Die Ätzstopschicht wirkt als Ätzstop. Dadurch ist eine einfache Prozeßkontrolle über eine Mindestätzzeit für eine bestimmte Ätztiefe gegeben. Nach Entfernung des Resists durch ein geeignetes Lösungsmittel, z. B. Hoechst AZ 200 ist das DOE fertig hergestellt. Falls das Resist bei der späteren Verwendung des DOE nicht stört, kann die Entfernung unterbleiben.

**Ausführungsbeispiele**

1. Gitterkoppler für Oberflächensensoren:

a) Unter Verwendung einer Mikrowellen-Plasma-Impuls-CVD Anlage wurden auf einem Quarzglassubstrat bei einer Substrattemperatur von 150 °C eine 10 nm dicke $TiO_2$ -Ätzstopschicht aus einem $TiCl_4/O_2$-Plasma abgeschieden, auf der dann eine 5 nm dicke

$SiO_2$ -Schicht (zu strukturierende Schicht) aus einem $HMDSO/O_2$-Plasma bei einer Konzentration von 1 % HMDSO in $O_2$ abgeschieden wurde. Die $SiO_2$ -Schicht hat eine interferometrisch gemessene Oberflächenrauhigkeit von 0.7 nm ( RMS) und eine Mohs-Härte von 6.

Das so beschichtete Substrat wurde mit einem handelsüblichen Photolack AZ 1350 mit einer Schichtdicke von < 100 nm beschichtet und durch holographische Doppelbelichtung mit anschließender Entwicklung mit zwei überlagerten Gitterstrukturen versehen. Das Gitter wurde dann in einem Trockenätzprozeß mittels eines $CF_4/O_2/Ar$-Plasmas in die $SiO_2$ -Schicht geätzt. Die Ätzbarkeit der $SiO_2$ -Schicht war gegenüber der $TiO_2$ -Schicht um einen Faktor > 25 gröber. Die erzielte Strukturtiefe des Gitters betrug 5 nm $\pm$ 07 nm, d. h. der Fehler liegt in der Größenordnung der Oberflächenrauhigkeit des Substrats.

Eine besonders vorteilhafte Ausführungsform stellt den Gebrauch kostengünstiger naßchemischer Prozeßschritte im vgl. zu aufwendigen Trockenätzprozessen dar, wie am Beispiel b erläutert wird.

b) Analog a, wobei als Ätzschritt ein Naßätzprozeß in einer Ätzlösung aus 1-%iger HF verwendet wurde. Die Ätzzeit betrug 10 s. Der Unterschied in den Ätzraten betrug einen Faktor > 100. Aufgrund des günstigen Aspektverhältnisses von 5:350 bzw. 400 konnte ein nahezu rechteckförmiges, binäres Gitter mit der gewünschten Gittertiefe von (5 $\pm$ 0,7) nm erhalten werden.

c) Analog Beispiel b, wobei als zu strukturierende Schicht eine aus einem $HMDSO/O_2$-Plasma mit 5%-HMDSO-Gehalt auf einem Borosilikatglas, AF 45 der Deutschen Spezialglas AG, abgeschieden wurde.

Dem Fachmann ist es möglich, für das naßchemische Ätzverfahren geeignete Ätzrezepturen unter Verwendung von verdünnter Flußsäure und üblichen Zusätzen wie Fluoridsalze und Mineralsäuren aufzufinden, um die um einen Faktor > 10 geforderte Ätzbarkeit der $SiO_2$ -ähnlichen Schicht gegenüber der Ätzstopschicht einzustellen.

d) Das nach a) strukturierte Substrat wurde mittels des in Beispiel a genannten Mikrowellen-Impuls-Plasma-CVD-Verfahrens mit einem 140 mm dicken Monomodewellenleiter aus $TiO_2$ beschichtet. Mittels eines HeNe-Lasers konnten unter einem Winkel von 8 und 22 ° der TE-Mode in den Wellenleiter eingekoppelt werden. Die Lauflänge des Modes auf dem Gitter betrug 4 mm.

e) Ein weiteres nach a) strukturiertes Substrat wurde als Prägestempeleinsatz in eine Heißprägemaschine eingesetzt. Die Gitterstruktur wurde in eine Polycarbonatfolie in einem Heißprägeprozeß bei Temperaturen von 160 °C und einem Prägedruck von 30 bar übertragen. Die gemessene absolute Beugungseffizienz der so kopierten Gitter betrug > 95 % der absoluten Beugungseffizienz des Glasmasters.

**Patentansprüche**

1. Verfahren zur Herstellung anorganischer diffraktiver Elemente, insbesondere aus Glas, durch Ätzen, bei welchem ein Substrat mit einer die nicht zu ätzenden Partien abdeckenden, gegenüber dem Ätzmedium widerstandsfähigen Maske, die der zu erzeugenden Reliefstruktur entspricht, überzogen wird, danach in dem Substrat an den nicht von der Maske bedeckten Stellen mittels eines Ätzverfahrens das gewünschte Relief erzeugt wird und, falls erforderlich, anschließend die Maske wieder entfernt wird,
und wobei vor dem Aufbringen der Maske in dem Substrat zur Einstellung einer definierten Ätztiefe in einem definierten Abstand von der Substratoberfläche, welcher der einzustellenden Strukturtiefe entspricht, eine Grenzfläche zwischen zwei verschiedenen Materialien mit unterschiedlichem Ätzverhalten erzeugt wird, die als Ätzstop ausgenutzt wird,
**dadurch gekennzeichnet,**
daß das Substrat zur Erzeugung der Grenzfläche mit einer Ätzstopbeschichtung und einer weiteren, zu strukturierenden Beschichtung versehen wird, wobei die Dicke der zu strukturierenden Beschichtung der Strukturtiefe der Reliefstruktur entspricht.

2. Verfahren zur Herstellung anorganischer diffraktiver Elemente, insbesondere aus Glas, durch Ätzen, bei welchem ein Substrat mit einer die nicht zu ätzenden Partien abdeckenden, gegenüber dem Ätzmedium widerstandsfähigen Maske, die der zu erzeugenden Reliefstruktur entspricht, überzogen wird, danach in dem Substrat an den nicht von der Maske bedeckten Stellen mittels eines Ätzverfahrens das gewünschte Relief erzeugt wird und, falls erforderlich, anschließend die Maske wieder entfernt wird,
und wobei vor dem Aufbringen der Maske in dem Substrat zur Einstellung einer definierten Ätztiefe in einem definierten Abstand von der Substratoberfläche, welcher der einzustellenden Strukturtiefe entspricht, eine Grenzfläche zwischen zwei verschiedenen Materialien mit unterschiedlichem Ätzverhalten erzeugt wird, die als Ätzstop ausgenutzt wird,
**dadurch gekennzeichnet,**
daß die Grenzfläche durch Auslaugen des Substrats in einem oberflächennahen Bereich erzeugt wird, wobei die Auslaugtiefe der Strukturtiefe der Reliefstruktur entspricht, und daß die Reliefstruktur in die Auslaugschicht eingebracht wird, wobei die Auslaugschicht aus einem Material mit niedrigerer Ätzrate als das Substrat besteht, so daß die Grenzfläche zum nichtausgelaugten Substratmaterial als Ätzstop wirkt.

3. Verfahren nach Anspruch 1,
**dadurch gekennzeichnet,**
daß die Beschichtung mittels eines PVD-, CVD- oder SOL-GEL-Verfahrens aufgebracht wird.

4. Verfahren nach Anspruch 3,
**dadurch gekennzeichnet,**
daß die Beschichtungen mittels eines gepulsten Plasma- oder Laser-CVD-Verfahrens aufgebracht werden.

5. Verfahren nach wenigstens einem der Ansprüche 1 bis 4,
**dadurch gekennzeichnet,**
daß die Reliefstruktur mittels eines Trocken- oder naßchemischen Ätzverfahrens erzeugt wird.

6. Verfahren nach Anspruch 5,
**dadurch gekennzeichnet,**
daß als Trockenätzverfahren reaktives Ionenätzen eingesetzt wird.

7. Verfahren nach wenigstens einem der Ansprüche 1 bis 6,
**dadurch gekennzeichnet,**
daß der Ätzstop während des Ätzens unmittelbar durch ein sprunghaftes Abfallen der Ätzrate bei Erreichen der Materialgrenzfläche bewirkt wird.

8. Verfahren nach Anspruch 7,
**dadurch gekennzeichnet,**
daß die Ätzrate beim Übergang von einem Material auf das andere um wenigstens einen Faktor 10 abnimmt.

9. Verfahren nach Anspruch 8,
**dadurch gekennzeichnet,**
daß die Ätzrate um wenigstens einen Faktor 50 abnimmt.

10. Verfahren nach wenigstens einem der Ansprüche 1 bis 9
bei welchem ein Trockenätzverfahren angewandt wird, bei dem während des Ätzprozesses über der zu ätzenden Substratoberfläche ein Plasma entsteht,
**dadurch gekennzeichnet,**
daß die Änderungen in der von dem Plasma ausgesandten Strahlung beim Übergang von der zu strukturierenden Beschichtung zum Substratmaterial bzw. zur Ätzstopbeschichtung als Stopsignal zur Beendigung des Ätzprozesses ausgenutzt wird.

11. Verfahren nach Anspruch 10,
**dadurch gekennzeichnet,**
daß die Änderung der Plasmafarbe beim Übergang von einem Material zum anderen an der Grenzfläche als Signal für die Beendigung des Ätzprozesses genutzt wird.

12. Verwendung eines nach einem Verfahren nach wenigstens einem der Ansprüche 1 bis 11 hergestellten diffraktiven Elements als Abformwerkzeug für einen Abformprozeß zur Feinstrukturierung von Substraten aus Kunststoff oder Materialien mit hohem Kunststoffanteil.

13. Verwendung nach Anspruch 12,
**dadurch gekennzeichnet,**
daß die Strukturtiefe der Reliefstruktur weniger als 30 nm beträgt.

14. Verwendung nach Anspruch 13,
**dadurch gekennzeichnet,**
daß die Strukturtiefe weniger als 20 nm beträgt.

15. Verwendung nach wenigstens einem der Ansprüche 12 bis 14,
**dadurch gekennzeichnet,**
daß der Strukturabstand in der Größenordnung der Wellenlänge der zu beugenden Strahlung liegt.

16. Verwendung nach wenigstens einem der Ansprüche 12 bis 15,
**dadurch gekennzeichnet,**
daß die zu strukturierende Schicht aus $SiO_2$, $TiO_2$, $Al_2O_3$, $ZrO_2$, $HfO_2$ oder $Si_3N_4$ oder aus Mischungen aus diesen Komponenten besteht.

17. Verwendung nach wenigstens einem der Ansprüche 12 bis 16,
**dadurch gekennzeichnet,**
daß die zu strukturierende Schicht amorph ist.

18. Verwendung nach wenigstens einem der Ansprüche 12 bis 17,
**dadurch gekennzeichnet,**
daß die zu strukturierende Schicht eine Oberflächenrauhigkeit von < 2.5 nm RMS, vorzugsweise < 1.5 nm RMS aufweist.

19. Verwendung nach wenigstens einem der Ansprüche 12 bis 18,
**dadurch gekennzeichnet,**
daß die zu strukturierende Schicht eine Oberfläche mit einer Mohshärte $\geq$ 6 aufweist.

20. Verwendung nach wenigstens einem der Ansprüche 12 bis 19,
**dadurch gekennzeichnet,**
daß das Substrat ein Floatglas ist.

**Claims**

1. Method for the production of inorganic diffractive elements, in particular from glass, by etching, in which a substrate is coated with a mask which covers those parts which are not to be etched, is resistant to the etchant and corresponds to the relief structure to be produced, the desired relief is then produced in the substrate at the points not covered by the mask, using an etching method, and if necessary the mask is subsequently removed, an interface, which is used as an etch stop, between two different materials having different etching characteristics, being produced in the substrate before application of the mask, in order to set a defined etching depth, at a defined distance from the substrate surface, which corresponds to the structural depth to be set, characterized in that, in order to produce the interface, the substrate is provided with an etch-stop coating and a further coating that is to be structured, the thickness of the coating that is to be structured corresponding to the structural depth of the relief structure.

2. Method for the production of inorganic diffractive elements, in particular from glass, by etching, in which a substrate is coated with a mask which covers those parts which are not to be etched, is resistant to the etchant and corresponds to the relief structure to be produced, the desired relief is then produced in the substrate at the points not covered by the mask, using an etching method, and if necessary the mask is subsequently removed, an interface, which is used as an etch stop, between two different materials having different etching characteristics, being produced in the substrate before application of the mask, in order to set a defined etching depth, at a defined distance from the substrate surface, which corresponds to the structural depth to be set, characterized in that the interface is produced by leaching the substrate in a region close to the surface, the leaching depth corresponding to the structural depth of the relief structure, and in that the relief structure is formed in the leaching layer, the leaching layer consisting of a material having a lower etching rate than the substrate, so that the interface with the unleached substrate material acts as an etch stop.

3. Method according to Claim 1, characterized in that the coating is applied by means of a PVD, CVD or SOL-GEL method.

4. Method according to Claim 3, characterized in that the coatings are applied by means of a pulsed plasma or laser CVD method.

5. Method according to at least one of Claims 1 to 4, characterized in that the relief structure is produced by means of a dry or wet-chemical etching method.

6. Method according to Claim 5, characterized in that reactive ion etching is used as the dry etching method.

7. Method according to at least one of Claims 1 to 6, characterized in that the etch stop is effected during the etching directly by an abrupt drop in the etching rate when the material interface is reached.

8. Method according to Claim 7, characterized in that the etching rate on transition from one material to the other decreases by at least a factor of 10.

9. Method according to Claim 8, characterized in that the etching rate decreases by at least a factor of 50.

10. Method according to at least one of Claims 1 to 9, in which use is made of a dry etching method, in which a plasma is created during the etching process, above the substrate surface to be etched, characterized in that the changes in the radiation emitted by the plasma on transition from the coating that is to be structured to the substrate material or to the etch-stop coating is used as a stop signal for ending the etching process.

11. Method according to Claim 10, characterized in that the change in the plasma colour on transition from one material to the other at the interface is used as a signal for ending the etching process.

12. Use of a diffractive element, produced using a method according to at least one of Claims 1 to 11, as a texturing tool for a texturing process for the fine-structuring of substrates made of plastics or materials having high plastics content.

13. Use according to Claim 12, characterized in that the structural depth of the relief structure is less than 30 nm.

14. Use according to Claim 13, characterized in that the structural depth is less than 20 nm.

15. Use according to at least one of Claims 12 to 14, characterized in that the structural spacing is of the order of magnitude of the wavelength of the radiation to be diffracted.

16. Use according to at least one of Claims 12 to 15, characterized in that the layer to be structured con-

sists of $SiO_2$, $TiO_2$, $Al_2O_3$, $ZrO_2$, $HfO_2$ or $Si_3N_4$ or of mixtures of these components.

17. Use according to at least one of Claims 12 to 16, characterized in that the layer to be structured is amorphous.

18. Use according to at least one of Claims 12 to 17, characterized in that the layer to be structured has a surface roughness of < 2.5 nm RMS, preferably < 1.5 nm RMS.

19. Use according to at least one of Claims 12 to 18, characterized in that the layer to be structured has a surface with a Mohs hardness $\geq$ 6.

20. Use according to at least one of Claims 12 to 19, characterized in that the substrate is a float glass.

**Revendications**

1. Procédé pour la production d'éléments diffractifs inorganiques, en particulier en verre, par gravure, dans lequel un substrat est recouvert d'un masque résistant au milieu caustique, couvrant les parties qui ne sont pas à attaquer et qui correspond à la structure du relief à produire, après quoi le relief voulu est produit sur le substrat, au moyen d'un procédé de gravure, aux endroits non recouverts par le masque, et le masque est ensuite retiré si nécessaire,
et dans lequel une surface de séparation entre deux matériaux différents ayant des comportements différents à la gravure, qui est utilisée comme arrêt de l'attaque, est produite dans le substrat, avant le dépôt du masque, pour établir une profondeur de gravure définie à une distance définie de la surface du substrat, qui correspond à la profondeur des structures à déterminer, **caractérisé en ce que** le substrat est doté, pour la production de la surface de séparation, d'un revêtement d'arrêt de l'attaque et d'un autre revêtement à structurer, l'épaisseur du revêtement à structurer correspondant à la profondeur des structures de la structure en relief.

2. Procédé pour la production d'éléments diffractifs inorganiques, en particulier en verre, par gravure, dans lequel un substrat est recouvert d'un masque résistant au milieu caustique, couvrant les parties qui ne sont pas à attaquer et qui correspond à la structure du relief à produire, après quoi le relief voulu est produit sur le substrat, au moyen d'un procédé de gravure, aux endroits non recouverts par le masque, et le masque est ensuite retiré si nécessaire,
et dans lequel une surface de séparation entre deux matériaux différents ayant des comportements différents à la gravure, qui est utilisée comme arrêt de l'attaque, est produite dans le substrat, avant le dépôt du masque, pour établir une profondeur de gravure définie à une distance définie de la surface du substrat, qui correspond à la profondeur des structures à déterminer, **caractérisé en ce que** la surface de séparation est formée par lessivage du substrat dans une zone proche de la surface, la profondeur du lessivage correspondant à la profondeur des structures de la structure en relief, et en ce que la structure en relief est introduite dans la couche lessivée, la couche lessivée étant constituée d'un matériau de taux d'attaque plus faible que le substrat, de telle sorte que la surface de séparation avec le matériau du substrat non lessivé agit comme un arrêt de l'attaque.

3. Procédé suivant la revendication 1, **caractérisé en ce que** le revêtement est formé au moyen d'un procédé PVD, CVD ou sol-gel.

4. Procédé suivant la revendication 3, **caractérisé en ce que** les revêtements sont formés au moyen d'un procédé CVD au plasma ou au laser pulsés.

5. Procédé suivant l'une au moins des revendications 1 à 4, **caractérisé en ce que** la structure en relief est réalisée au moyen d'un procédé de gravure chimique à sec ou humide.

6. Procédé suivant la revendication 5, **caractérisé en ce que** l'on utilise la corrosion ionique réactive comme procédé de gravure à sec.

7. Procédé suivant l'une au moins des revendications 1 à 6, **caractérisé en ce que** l'arrêt de l'attaque est provoqué immédiatement pendant la gravure, par une chute brutale du taux d'attaque lorsque l'on atteint la surface de séparation du matériau.

8. Procédé suivant la revendication 7, **caractérisé en ce que** le taux d'attaque diminue au moins d'un facteur 10 lors du passage d'un matériau à l'autre.

9. Procédé suivant la revendication 8, **caractérisé en ce que** le taux d'attaque diminue au moins d'un facteur 50.

10. Procédé suivant l'une au moins des revendications 1 à 9, dans lequel on applique un procédé de gravure à sec, dans lequel, pendant le processus de l'attaque, un plasma se forme sur la surface du substrat à graver, **caractérisé en ce que** les modifications du rayonnement émis par le plasma lors du passage du revêtement à structurer au matériau du substrat, ou au revêtement d'arrêt de l'attaque, sont utilisées comme signal d'arrêt pour mettre fin au processus de gravure.

11. Procédé suivant la revendication 10, **caractérisé en ce que** la modification de la couleur du plasma, lors du passage d'un matériau à l'autre à la surface de séparation, est utilisée comme signal pour mettre fin au processus de gravure.

12. Utilisation d'un élément diffractif, produit suivant l'une au moins des revendications 1 à 11, comme moule dans un processus de moulage à structurers fines de substrats de matière plastique ou de matériaux à haute teneur en matières plastiques.

13. Utilisation suivant la revendication 12, caractérisée en ce que la profondeur des structures de la structure en relief est de moins de 30 nm.

14. Utilisation suivant la revendication 13, caractérisée en ce que la profondeur des structures est de moins de 20 nm.

15. Utilisation suivant l'une au moins des revendications 12 à 14, caractérisée en ce que l'intervalle entre les structures se situe dans l'ordre de grandeur des longueurs d'onde du rayonnement à diffracter.

16. Utilisation suivant l'une au moins des revendications 12 à 15, caractérisée en ce que la couche à structurer est composée de $SiO_2$, de $TiO_2$, d'$Al_2O_3$, de $ZrO_2$, d'$HfO_2$ ou de $Si_3N_4$, ou de mélanges de ces composants.

17. Utilisation suivant l'une au moins des revendications 12 à 16, caractérisée en ce que la couche à structurer est amorphe.

18. Utilisation suivant l'une au moins des revendications 12 à 17, caractérisée en ce que la couche à structurer présente une rugosité de surface de <2,5 nm RMS, de préférence <1,5 nm RMS.

19. Utilisation suivant l'une au moins des revendications 12 à 18, caractérisée en ce que la couche à structurer présente une surface de dureté Mohs $\ge 6$.

20. Utilisation suivant l'une au moins des revendications 12 à 19, caractérisée en ce que le substrat est un verre flotté.

## Entspiegelung

IO → 0.99 IO

## Strahlteiler
gleiche Intensitäten

IO → I1, I1, I1

## Monochromator

Lambda 1,2 → Lambda 1, Lambda 2

## Polarisator

S,P → S, P

## Lichtkoppler

I1, I1, I1 → IO

## Gitterkoppler

Wellenleiter

## Achromat

Lambda 1, Lambda 2 → Lambda 1,2

## Strahlformer

IO → IO

## Strahlteiler
ungleiche Intensitäten

IO → I1, I2 << I1

Fig. 1

Berechnung
der Hologrammstruktur

Ätzstopschicht

$n_{Besch.}$

$n_{Substr.}$

SOL-GEL -
Beschichtung

Photoresist -
Beschichtung

Laserstrahl

Laserstrahl -
Belichtung

Resist -
Entwicklung

Ionen,
neutrale
Teilchen

Ätzprodukte

Reaktives
Ionenätzen

Resist -
Entfernung

Fig. 2